(19) **Europäisches Patentamt**
**European Patent Office**
**Office européen des brevets**

(11) **EP 2 801 966 A1**

(12) **EUROPEAN PATENT APPLICATION**

(43) Date of publication:
**12.11.2014 Bulletin 2014/46**

(51) Int Cl.:
***G09B 19/24*** (2006.01)

(21) Application number: **13185100.8**

(22) Date of filing: **19.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.09.2012 HU 3204112**

(71) Applicant: **Laszlo, Dulin**
**1118 Budapest (HU)**

(72) Inventor: **Laszlo, Dulin**
**1118 Budapest (HU)**

(74) Representative: **Kacsuk, Zsófia**
**Kacsukpatent**
**Üteg u. 11/a**
**1139 Budapest (HU)**

Remarks:
Claims 16-26 are deemed to be abandoned due to non-payment of the claims fees (Rule 45(3) EPC).

(54) **Method for simulating welding**

(57) The invention relates to a method for simulating welding with a virtual welding simulator that comprises a simulator welding gun, a simulator welding helmet having an inner display device capable of 3-dimensional imaging and a control device connected to them, characterised by
- providing a camera on the simulator welding helmet,
- providing an optical marker on the simulator welding gun,
- providing a workpiece being provided with an optical marker,
- detecting the optical markers with the camera,
- calculating the spatial position of the optical markers and thereby the simulator welding gun and the workpiece via the control device,
- displaying to the user 3-dimensional virtual reality on the inner display device of the simulator welding helmet, and displaying in the virtual reality a virtual welding gun corresponding to the simulator welding gun and a virtual workpiece corresponding to the workpiece in accordance with their spatial position,
- allowing the user use of the simulator welding gun such as to simulate welding,
- determining the parameters of a simulated weld from the user's use of the simulator welding gun and the relative positions of the simulator welding gun and the workpiece with respect to each other via the control device,
- displaying to the user a virtual weld corresponding to the simulated weld parameters on the virtual workpiece on the inner display device of the simulator welding helmet.

Fig. 1

EP 2 801 966 A1

**Description**

The present invention relates to a method for simulating welding with a virtual welding simulator that comprises a simulator welding gun, a simulator welding helmet having an inner display device capable of 3-dimensional image display and a control device connected to these.

The training of beginner welders and the further training of qualified welders requires practicing the process of welding. Using conventional methods (i.e. real welding) incurs very high material and energy expenses, the consumption of wearing parts is high and substantial amount of welding waste is produced. Another problem is associated with the fact that the beginners or intermediate trainees are exposed to the general stress, radiation, and smoke occuring during welding, moreover, welding necessarily presents a risk of accident especially for beginners.

In order to overcome the above problems welding simulators, such as the "VRTEX 360" simulator of Lincoln Electric company has been developed, which allows the practicing of welding on a standard workpiece in 3-dimensional virtual reality with a simulator welding gun.

The known solutions have many drawbacks. First of all, these cannot integrate the real environment, whereby only standard workpieces can be welded, which are fixed in a given position. Another disadvantage is that the thermodynamic processes are not simulated, whereby the quality of the simulated weld can only be displayed to a limited extent or not at all in virtual reality, thus for example weld defects and a possible burn through in the material of the workpiece cannot be displayed at all. A further disadvantage is that the correct position of the welding gun is indicated by displaying arrows, cones and other signs on the virtual image of the welding gun in order to indicate the direction of the correct movements, whereby the user is not taught to focus on the weld that is being created, instead he or she keeps looking at the tuition signs projected on the virtual welding gun.

It is an object of the present invention to overcome the problems associated with the prior art.

According to the invention these objects are achieved by a simulation method according to claim 1.

Preferably, the 3-dimensional image captured by the camera is presented to the user on the inner display device of the simulator welding helmet as virtual reality, which, during the simulation of welding, is partially or fully substituted with the 3-dimensional computer graphics of the simulated weld as virtual weld, and in a given case with the 3-dimensional computer graphics of the simulator welding gun as virtual welding gun and/or with the 3-dimensional computer graphics of the workpiece as virtual workpiece.

Preferably, the method comprises simulating an auto darkening filter of a real welding helmet by decreasing the light intensity of the virtual reality displayed on the inner display device of the welding helmet and/or by displaying the colours of the virtual reality in a darker tone.

Preferably, the workpiece is a standard workpiece that is provided with an optical marker and the method comprises displaying a 3-dimensional computer graphics of the standard workpiece as the virtual workpiece during the simulation of welding.

Preferably, the method comprises providing an optical marker on the workpiece prior to the simulation of welding and displaying the camera image of the workpiece in 3-dimension as the virtual workpiece.

Preferably, the method comprises determining the location of the weld from a weld position stored by a program of the control device.

Preferably, the method comprises displaying the computer graphics of a real welding gun as the virtual welding gun during simulation of welding.

Preferably, the method comprises providing the simulator welding gun with an acceleration sensor, preferably with an electric gyroscope, the signals of which is transmitted to the control device for calculating the spatial position of the simulator welding gun.

Preferably, the method comprises treating the virtual reality as a spatial lattice the volume elements of which are attributed the physical properties corresponding to the material structure of the workpiece, and calculating the parameters of the simulated weld by the physical simulation of the thermodynamic values on the lattice.

Preferably, the method comprises evaluating the simulated thermodynamic values during the simulation of welding via the control device and determining therefrom indicators relating to the quality of welding, and continuously displaying, preferably at a location corresponding to the peripheral field of vision of the user, the indicators graphically on the inner display device of the simulator welding helmet during the simulation of the welding.

Preferably, the method comprises determining, as a parameter of the simulated weld, the relative position of the simulated weld, created as a result of the simulated welding, with respect to the workpiece and displaying the virtual weld on the virtual workpiece at a position corresponding to the determined relative position.

Preferably, the method comprises determining, as a parameter of the simulated weld, the shape and thickness of the simulated weld created as a result of the simulated welding, and displaying the virtual weld on the virtual workpiece with a corresponding shape and thickness.

Preferably, the method comprises determining, as a parameter of the simulated weld, any defects and any burn throughs of the simulated weld created as a result of the simulation of welding, and displaying the virtual weld on the virtual workpiece together with any determined defects and burn throughs.

Preferably, the method comprises determining a simulated spark image by the control device, and displaying to the user a virtual spark image corresponding to the simulated spark image on the inner display device of the simulator welding helmet.

Preferably, the method comprises determining a simulated smoke image by the control device, and displaying to the user a virtual smoke image corresponding to the simulated smoke image on the inner display device of the simulator welding helmet.

Preferably, the method comprises allowing the user to set the simulation parameters of the simulated welding and simulating the welding based on the provided parameters.

Preferably, the method comprises allowing the user to set as simulation parameters the parameters of the workpiece, to select a simulated welding gun and to set welding parameters.

Preferably, the method comprises controlling the set simulation parameters by the control device, and deferring the start of the simulation until any errors have been corrected.

Preferably, the method comprises displaying the 3-dimensional image that is displayed on the inner display device of the simulator welding helmet on an external 3-dimensional display device as well for other user(s).

Preferably, the method comprises providing an audio system in the simulator welding helmet and providing sounds corresponding to the sound of the simulated welding for the user during simulation of welding.

Preferably, the method comprises providing a mount for spatially mounting the workpiece.

Preferably, the method comprises providing a simulator cold wire feeder for simulating the manual feeding of the wire in the case of the simulation of tungsten electrode inert gas welding.

Preferably, the method comprises providing a capacitive sensor row as the simulator cold wire feeder for sensing the displacement of the user's thumb, and calculating therefrom the speed of feeding the cold wire.

Preferably, the method comprises creating images for the right and the left eye for 3-dimensional displaying from the camera image using perspective projection technology, or using a stereo camera for capturing 3-dimensional images.

Preferably, the method comprises providing a welding glove having a colour suitable for using green screen technology, recognising the welding glove and substituting it with corresponding computer graphics in the virtual reality.

Preferably, the method comprises determining the position of the weld that is to be created and calculating an optimal welding gun position and guidance therefrom via the control device, and comparing the position and guidance of the simulator welding gun with the optimal gun position and guidance during the use of the simulator welding gun for simulating the welding, and continuously displaying, preferably at a location corresponding to the peripheral field of vision of the user, the result of the evaluation on the inner display device of the simulator welding helmet during the simulation of the welding.

Advantageous embodiments of the invention are defined in the dependent claims.

Further details of the invention will be explained by way of exemplary embodiments with reference to the drawings.

Fig. 1 is a schematic view of a welding simulation system according to the invention.

Fig. 2 is a perspective view of a simulator welding gun.

Fig. 3 is a schematic cross-sectional view showing the inside of a simulator welding helmet of the simulator.

Fig. 4 is a perspective view of a standard workpiece.

Fig. 5 is an image displayed to the user during simulation of welding showing a virtual workpiece corresponding to the workpiece according to Fig. 4 and a virtual welding gun corresponding to the simulator welding gun according to Fig. 2.

Fig. 6 is a perspective view of a real workpiece.

Fig. 7 is an image displayed to the user during simulation of welding showing a virtual workpiece corresponding to the workpiece according to Fig. 6 and a virtual welding gun corresponding to the simulator welding gun according to Fig. 2.

Fig. 8 illustrates standard welding positions and their symbol.

Fig. 9 is a diagram illustrating the lattice points of an exemplary lattice used for simulating the thermodynamic processes.

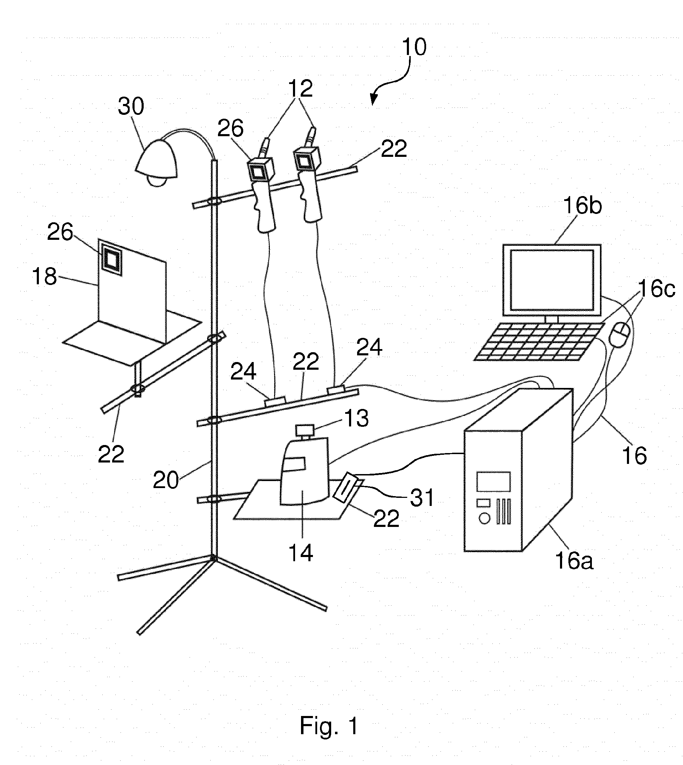

Fig. 1 schematically illustrates a preferred embodiment of a virtual welding simulation system 10 suitable for performing the method according to the invention. The main components of the simulation system 10 are as follows: one or more simulator welding guns 12, a simulator welding helmet 14 provided with a camera 13, and a control device 16. The simulation system 10 preferably comprises one or more standard workpieces 18, and a mount 20 having consoles 22 to which the standard workpiece 18 can be affixed in the desired position.

The simulator welding gun 12 is preferably similar to a real welding gun as regards its form and construction in order to ensure that the user of the simulator welding gun 12 feels as if he or she would be holding a real welding gun. When simulating different types of welding guns it is preferred to provide a plurality of simulator welding guns 12 corresponding to each type of welding gun. According to the present invention the simulation system 10 comprises two simulator welding guns 12: a TIG simulator welding gun 12 for the simulation of a welding gun used for arc welding with tungsten electrode and argon inert gas (TIG welding - tungsten inert gas welding), and a MIG simulator welding gun 12 for the simulation of a welding gun used for welding with a consumable wire electrode in an inert gas (MIG welding - metal inert gas welding). It is noted that in the case of both TIG and MIG welding the argon inert gas is often substituted with an argon gas mixture (e.g. 70% argon and 30% helium for TIG welding, and 92% argon and 8% carbon dioxide or 85% argon and 15% helium for MIG welding, but other compositions are also conceivable). The simulator welding guns 12 are preferably stored on the consoles 22 of the mount 20. Preferably the control of the simulator welding guns 12 is also ensured through a connector 24 mounted on one of the consoles 22.

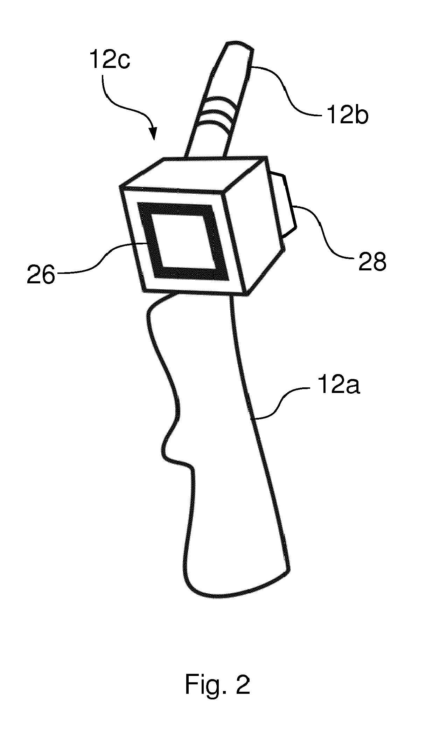

The simulator welding gun 12 is provide with an optical marker 26 (see Fig. 2), which is arranged such as to allow the camera 13 of the simulator welding helmet 14 worn by the user to see the optical marker 26 during use. According to the present embodiment this is solved by providing a marker carrying piece 12c on the simulator welding gun 12 between its grip portion 12a and its end 12b, which marker carrying piece 12c has an upper surface carrying the optical marker 26. The optical marker 26 is preferably a 2-dimensional code (e.g. a QR code), which allows for determining the position of the optical marker and hence the whole simulator welding gun 12 when the optical marker 26 is captured by the camera 13 and the image is evaluated by an image processing program that is preferably running on the control device 16. Optionally, acceleration sensors 28, preferably electric gyroscopes can be arranged on the simulator welding gun 12 for determining the exact orientation of the simulator welding gun 12, and the signals of the acceleration sensors 28 are preferably also evaluated by a program running on the control device 16. By simultaneously using the optical marker 26 and the acceleration sensors 28 the exact spatial position of the simulator welding gun 12 can be determined very precisely and its displacement can be registered along all six degrees of freedom.

The optical marker 26 may be individual, i.e. a sign assigned specifically to the given simulator welding gun 12, whereby the optical marker 26 is suitable for identifying the simulator welding gun 12 when its image is captured by the camera 13 and processed by a suitable image processing program. Alternatively, it is also possible to provide all of the simulator welding guns and optionally even the workpieces 18 with a uniform optical marker 26, in which case the user may determine in other ways (e.g. through an input periphery) which simulator welding gun 12 is going to be used, and the optical marker 26 only serves to determine the position (including the location) of the simulator welding gun 12.

The simulator welding guns 12 are connected to the control device 16, which, according to the present embodiment, is a computer 16a having a display 16b and the usual peripheries 16c (such as keyboard, mouse, etc.). It will be apparent for the skilled person that other information technology devices can be used as the control system 16, e.g. notepad, palmtop, microcontroller, etc.

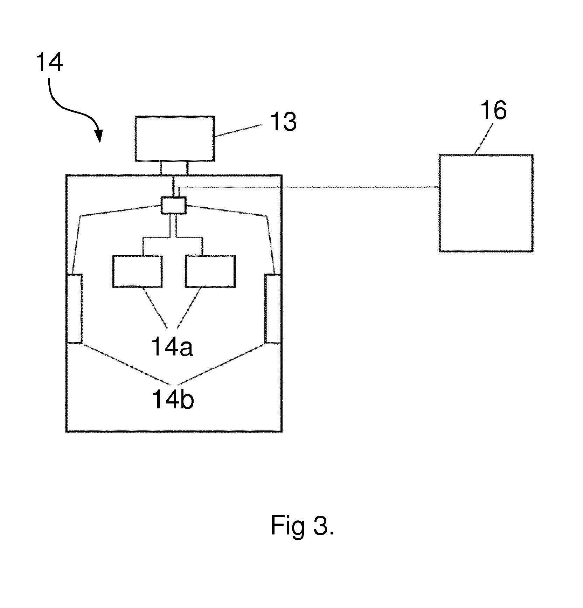

The control system 16 is also in connection with the simulator welding helmet 14, which is preferably also stored on the mount 20. Inside the simulator welding helmet 14 an display device 14a is provided, which is suitable for displaying 3-dimensional virtual reality (see Fig. 3). Any known technology can be used that is suitable for forming a 3-dimensional image, including stereoscopic and autostereoscopic displays. Stereoscopic displays are based on the concept that a right side image and a left side image is displayed for the right eye and the left eye respectively, which are perceived by the human brain as a single 3-dimensional image. It is possible to display the right side image and the left side image separately to the right and left eye of the user, whereby the two eyes view two different display screens (or screen areas), as indicated at the embodiment shown in Fig. 3. Another possibility is to project the two images on the same spatial location but typically with light beams having different physical properties (for example red and blue light, orthogonally polarised light beams, etc.) In this case the display requires a further active or passive user device (typically glasses) for separating the right and left side images. An example of such an active user device is alternate frame sequencing shutter glasses, an example of such a passive user device is polarisation filter glasses with a corresponding projector. In the case of the latter embodiment the simulator welding helmet 14 is dimensioned so as to allow the user to wear the special glasses belonging to the display device 14a inside the simulator welding helmet 14.

The autostereoscopic display devices 14a do not require further user devices as in this case the common display is designed such that the user only sees the right side image with his or her right eye and only sees the left side image with his or her left eye. An example is the parallax barrier display.

The simulator welding helmet 14 preferably also comprises an audio system 14b, for example in the form of two loudspeakers arranged at the vicinity of the user's two ears, for providing sounds corresponding to the sound of the simulated welding.

Preferably the control device 16 provides the signals for both the 3-dimensional display device 12a and the audio system 14b. The 3-dimensional image displayed on the display device 12a may partially or fully originate from the camera 13, the image of which is transformed into a 3-dimensional image in a known way by a suitable program running on the control device 16 and is then transmitted to the display device 12a in a form suitable for 3-dimensional image displaying. For example the control device 16 uses the so-called perspective projection technology to create a 3-dimensional image from the image captured by the camera 13. Perspective projection is a known mathematical method wherein the objects in the image of the camera 13 are distorted in a perspective way in accordance with the view angle of the right and the left eye respectively, and the thus resulting right side and left side images are transmitted in the form required by the 3-dimensional display device 14a.

It is also possible that the camera 13 is a stereo camera suitable for capturing 3-dimensional images, in this case the image of the camera can be transmitted directly to the corresponding 3-dimensional display device 14a. It can be said in both cases that the image, captured by the camera 13 and displayed in 3-dimension in the form of virtual reality can be substituted partially or fully with the 3-dimensional computer graphics of the simulated weld, as virtual weld, and the simulator welding gun 12 can be substituted with its 3-dimensional computer graphics, as virtual welding gun 12', and the workpiece 18 with its 3-dimensional computer graphics, as virtual workpiece 18'. Since no real weld is produced during the simulated welding process the virtual weld is always displayed in the form of computer graphics, however, the image of the workpiece 18 and the simulator welding gun 12 captured by the camera 13 does not necessarily need to be substituted (i.e. masked) by the computer graphics as will be apparent from the rest of the description.

According to the embodiment depicted in Fig. 1 and 3 the camera 13 is shown as being mounted on the top of the simulator welding helmet 14, however, it is obvious that the camera 13 can be provided on the simulator welding helmet 14 such that it is not mounted on its top, instead it is incorporated in an other area of the simulator welding helmet 14.

The simulation system 10 preferably also comprises standard workpieces 18 of different shape, for preparing the trainees for the welding examinations. The workpieces 18 are provided with optical markers 26 similarly to the simulator welding guns 12, which optical markers 26 are captured by the camera 13 of the simulator welding helmet 14 and are processed by the image processing program running on the control system 16, whereby the position (including the location) of the workpiece 18 can be determined, and - in case of individual optical markers 26 - the workpieces 18 can be identified.

During the simulation of the welding the user affixes the workpiece 18 on one of the consoles 22 of the mount 20 that is provided for this purpose, in the position corresponding to the welding position that is being practiced.

Preferably the mount 20 is also provided with a light source 30 for illuminating the affixed workpiece 18.

Preferably the simulation system 10 also includes a simulator cold wire feeder 31 for simulating the manual feeding of the wire in the case of the simulation of tungsten electrode inert gas welding (TIG process). For example the commercially available roller feeder of the CS Wave simulator can be used as the simulation cold wire feeder 31. Another possibility is to use a capacitive sensor row for sensing the displacement of the user's thumb, thus simulating the way the thumb pushes the wire forward. The simulation cold wire feeder 31 is preferably also stored on the mount 20.

The simulation method according to the invention will now be presented with reference to the depicted exemplary simulation system 10.

Firstly, the simulation of welding the standard wokpiece 18 will be described. The controlling and execution of the simulation is preferably performed by one or more programs installed on the control device 16, however, for the sake of simplicity, when wishing to refer to an operation performed by the one or more programs, it will be said that the operation is performed by the control device 16. It will be apparent to a person skilled in the art of programming what kind of program or program component would be suitable for performing the given operation, and how the control device 16 could be programmed to perform such an operation.

The user (or the tutor) mounts the workpiece 18 in the desired welding position on the console 22 of the mount 20, which is provided for this purpose. After this, the user inputs the simulation parameters of the simulated welding through an input periphery 16c of the computer 16a, such as the parameters of the workpiece 18, the parameters of the simulated welding gun, and the welding parameters. The latter is preferably given using the form and signs of the WPS (Welding Procedure Specification).

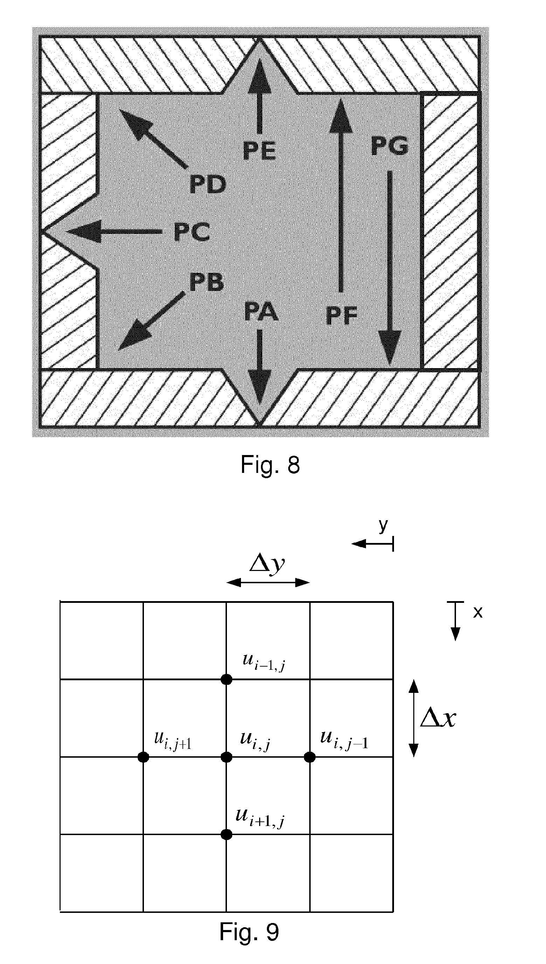

The inputted parameters of the workpiece 18 may advantageously include its material (e.g. steel, aluminium), thickness, preparation of the weld, type of weld (A, B, C, D, E, F), thickness of the plate, welding position (PA, PB, PC, PE, PF - see Fig. 8), and the plate spacing.

Preferably the parameters of the simulated welding gun are inputted by selecting the welding gun. For example, in the present embodiment the user may choose from a TIG and a MIG welding gun.

The welding parameters may preferably include the type of the weld that is to be created, the current of the simulated welding gun, the composition and amount of the simulated inert gas, in the case of MIG welding the material of the wire electrode, its diameter and the speed of the wire feed, in case of TIG welding for the simulation of the cold wire feeding the diameter of the cold wire and its material.

The simulation of the welding is performed in accordance with the given parameters with the help of the control device 16, i.e. the control device 16 uses these parameters to calculate the parameters of the simulated weld that is created by using (activating and moving) the simulator welding gun 12, as will be described later on.

Preferably the simulation parameters inputted by the user are checked by the control device 16 and the simulation of the welding can only be started after the user has corrected any mistakes. For example, it is not allowed to proceed with contradicting parameters or unprofessionally chosen parameters or settings. Preferably the errors are displayed to the user, for example by displaying an error message or by highlighting the errors in red colour on the user surface provided for inputting the parameters in order to draw the user's attention to the errors.

After having inputted correct simulation parameters the user places the simulator welding helmet 14 on his or her head. The camera 13 of the simulator welding helmet 14 captures an image of what the user sees, which is then displayed to the user as virtual reality by the inner 3-dimensional display device 14a of the simulator welding helmet 14. When an optical marker 26 enters the field of view of the camera 13, the control device 16 recognises the optical marker 26 and the corresponding object (workpiece 18 or simulator welding gun 12). Preferably, as long as either one of the workpiece's 18 optical marker 26 or the simulator welding gun's 12 optical marker 26 is not in the field of view of the camera 13 the 3-dimensional virtual reality obtained from the image captured by the camera 13 is presented to the user on 3-dimensional display device 14a within the simulator welding helmet 14, i.e. the user sees the environment in 3D that he or she would see without wearing the simulator welding helmet 14 and looking in the same direction. In this case the virtual workpiece 18' and the virtual welding gun 12' corresponding to the workpiece 18 and the simulator welding gun 12 is none other than the camera image of these objects displayed in 3D.

When both the workpiece's 18 and the simulator welding gun's 12 optical marker 26 comes within the field of view of the camera 13, the control device 16 preferably switches the virtual reality displayed on the inner display device 14a to simulation mode, i.e. from hereon the image of the camera 13 is partially or completely substituted by computer graphics that is also displayed in 3D. It is also conceivable, that whenever the control device 16 detects any of the optical markers 26, the camera image of the standard workpiece 18 or the simulator welding gun 12 is substituted by the computer graphics of the of workpiece 18 or the simulator welding gun 12 respectively. Preferably the computer graphics of a real welding gun is displayed as the virtual image of the simulator welding gun 12.

The requisite for the substitution with the computer graphics is that the control device 16 needs to determine the position (including the location) of the given object (the workpiece 18 or the simulator welding gun 12), which is done with the help of the optical markers 26 using known software techniques. In the case of the simulator welding gun 12 its position may also be determined with the help of the acceleration sensors 28, while in the case of the standard workpiece 18 its position may also be determined in view of its known shape and welding position (PA, PB, PC, PE, PF) inputted by the user.

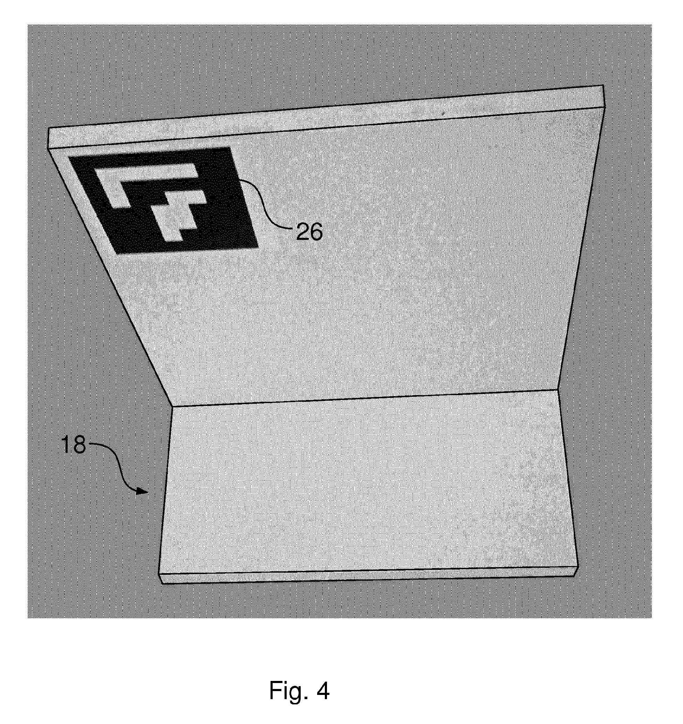

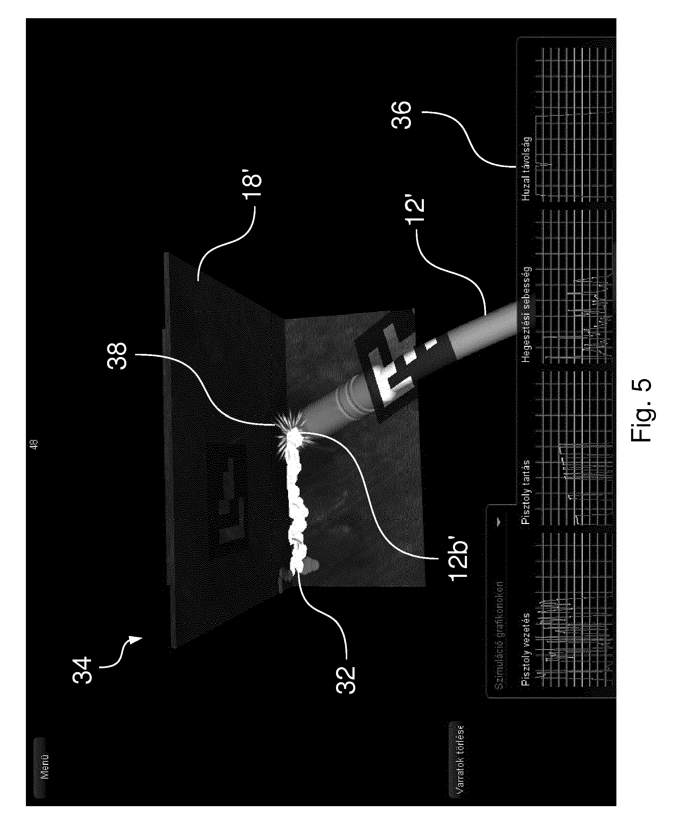

When training with the standard workpiece 18 preferably the whole of the camera image may be substituted by computer graphics, hence in this case only the virtual workpiece 18' in the form of computer graphics, the virtual welding gun 12' also in the form of computer graphics, and the virtual weld 32 that is to described later on, as well as other virtual effects are displayed as part of the virtual reality 34 displayed on the display device 14a inside the simulator welding helmet 14. Fig. 5 shows such a computer graphics displayed to the user, which includes the virtual workpiece 18' corresponding to the workpiece 18 according to Fig. 4 and the virtual welding gun 12' corresponding to the simulator welding gun depicted in Fig. 2.

Once the user moves the simulator welding gun 12 into the welding position he or she can start using the simulator welding gun 12 to simulate the welding, i.e. the simulator welding gun 12 is switched on similarly to the real welding gun, and the user manually moves the simulator welding gun 12 in a way that would produce the desired weld.

The control device 16 determines the parameters of the simulated weld from the use of the simulator welding gun 12 by the user, and from the relative positions of the simulator welding gun 12 and the workpiece 18, and the virtual weld 32 is displayed to the user on the virtual workpiece 18' on the display device 14a within the simulator welding helmet 14.

The position of the weld to be created on the standard workpiece 18 is known from the welding settings inputted by the user, and can be calculated by the control device 16, thus it is possible to compare the weld to be created and the simulated weld produced by the user's gun use. It is also possible to calculate the ideal position and guidance of the gun for producing the desired weld and this can be compared with how the simulator welding gun 12 is held and guided. The difference can be displayed in table form or graphically to the user or e.g. to a trainer supervising the user's work.

The auto darkening filter of a real welding helmet can be simulated by decreasing the light intensity of the virtual reality 34 displayed on the display device 14a inside the welding helmet 14 and/or by automatically setting the colours of the virtual reality 34 to a darker tone.

Preferably, the virtual reality 34 is regarded as a spatial lattice, wherein the elements of volume have the material properties of the workpiece 18, and the parameters of the simulated weld are calculated with thermodynamic simulation of the thermodynamic parameters, which calculation is performed on the lattice. During the simulation of the welding the control device 16 evaluates the simulated thermodynamic parameters, and determines therefrom indicators of the quality of the welding, which are constantly graphically displayed on the display device 14a of the simulator welding helmet 14 during the simulation of the welding, preferably in the form of diagrams 36 positioned in the peripheral field of vision of the user, as can be seen in Fig. 5. Preferably the following features are monitored and displayed as a function of time: gun guidance, gun distance, welding speed, angle of inclination. These welding indicators are preferably displayed using colour coding, for example such that the portions of the diagrams within the optimal range are displayed in green while the portions corresponding to poor quality welding are displayed in red, this way the user can determine within his or her peripheral vision when the welding operation is performed correctly (when the diagrams are in the green range), and when the welding operation needs correction (when one or more diagrams are in the red range), and a transition range can be displayed in a third colour (e.g. yellow), corresponding to a gun guidance that is not optimal but not very bad either. It is also conceivable to display instead of the whole diagram 36 only a red or green (or other colour coded) sign, e.g. a spot, in the peripheral field of vision of the user. This type of feedback has for advantage, as compared to what has been used in the prior art, that it does not distract the user from looking at the virtual weld 32, since the red/green (or other coloured) sign can be simultaneously perceived in the peripheral field of vision. In contrast therewith, the prior art solutions use arrows, cones and other signs to indicate the correct holding of the welding gun, whereby the user concentrates on the signs indicated on the virtual welding gun 12' instead of the virtual weld, which can result in bad routine, since the welder must observe the weld that is being created at all times and not the position of the welding gun.

Preferably, the determination of the parameters of the simulated weld includes the determination of the relative position of the simulated weld with respect to the workpiece 18 as a result of the simulated welding operation, and the virtual weld 32 is displayed accordingly on the virtual workpiece 18'. The position of the simulated weld can be determined from the trajectory of the welding end 12b of the simulator welding gun 12 (which is either the wire end or the tungsten end) with respect to the workpiece 18. The position of the end 12b can be easily calculated from the optical marker 26 serving as the origo in view of the dimensions of the simulator welding gun 12 (or the simulated real welding gun).

Preferably both the shape and thickness of the simulated weld is determined and the virtual weld 32 is displayed accordingly on the virtual workpiece 18'. The shape and thickness depends on the welding parameters, on the hand movements, and on the speed at which the simulator welding gun 12 is displayed. For example, if the simulator welding gun is moved more slowly a thicker simulated weld is produced, while faster movement results in a narrowed weld, and may even lead to a discontinuity in the weld.

Preferably such and similar weld defects are also determined and the virtual weld 32 is displayed on the virtual workpiece 18' together with any weld defects and, if any, with the possibly burn through of the material of the workpiece 18.

Preferably, one of the possible monitored weld defects is the simulated burn through of the material of the workpiece 18, which can be caused by keeping the end 12b of the simulator welding gun 12 in the same position for too long. In this case the burn through of the material of the virtual workpiece 18' is displayed to the user in the virtual reality 34.

Preferably, virtual spark image 38 is also displayed in the virtual reality 34 between the end 12b' of the virtual welding gun 12' and the virtual workpiece 18'. Preferably, the virtual spark 38 is produced by the virtual animation of the spark formation, that can be calculated by the control device 16 and a virtual spark image 38 corresponding to the simulated spark image can be displayed to the user on the display device 14a within the simulator welding helmet 14.

Preferably, virtual smoke image (not shown) can also be displayed by virtual animation in the virtual reality 34 between the end 12b' of the virtual welding gun 12' and the virtual workpiece 18' by the control device 16. In this case virtual smoke image corresponding to the simulated smoke image is displayed to the user on the display device 14a within the simulator welding helmet 14.

Preferably augmented reality technology is used for the visualisation. Preferably, a sound corresponding to the sound of the simulated welding is played to the user through the audio system 14b arranged within the simulator welding helmet 14 during the simulation of welding. The simulated weld parameters can be taken into account, since the real sound of the welding operation also depends on the quality of the weld. Another advantage of the audio system 14b is that the trainee can be exposed to a noise load that is comparable to the real noise load, in order to allow the trainee to get accustomed to the real welding operation from this point of view as well.

The simulation of the thermodynamic parameters is carried out as follows.

Heat conduction is a basic form of energy propagation, during which heat is transmitted from an elemental portion of the material to another elemental portion without the substantial displacement of the two elemental portions with respect to each other. In heated metals the heat propagates in two distinct ways from the point of view of the simulation. These are: the oscillation of the crystal lattice and the diffusion of the free electrons. The heat propagation through the contacting surfaces of two metals (e.g. as a result of the electric arc) is also a form of heat conduction, which is a process produced by the simultaneous effect of heat transfer and heat radiation. Heat transfer is the spatial propagation of energy, which is the ordered motion of the particles (e.g. electrons) of the medium. Heat radiation is the propagation of energy in the form of electromagnetic waves, which is transformed to heat at an other point of the radiated space. All bodies radiate electromagnetic waves. At low temperature (room temperature) the energy emitted in this way is negligible; but its importance increases with the rise of temperature. Where this needs to be taken into account a simplified physical model is needed because of the complexity of the mathematical methods precisely describing the spatial propagation of electromagnetic waves and their transformation (into other forms of energy).

It is mostly not possible to separate the three basic types of heat propagation, instead these occur together, whereby the heat propagation processes are generally complicated.

The heat conductivity of metals is typically greater than that of other solids. The heat conductivity of liquids is smaller as compared to solids, and gasses belong to the worst heat conductors. In the case of heat conduction, as a form of heat propagation, the atoms of the body at the higher temperature spot have higher kinetic energy and transfer energy to atoms of the lower temperature spot having lower kinetic energy by contacting the low energy atoms. A stronger connection between the molecules results in faster energy transfer. In the case of metals the free electrons also play significant role in the energy transfer, which are also responsible for the good electric conductivity of the metals. This explains why the heat and the electric conductivity of metals are nearly directly proportional with each other.

For the purpose of the simulation the creation of the physical model and the solving of the heat conduction equations in accordance with the conditions of the simulation means that the solution to the differential equation satisfying the starting and boundary conditions of the present situation is determined. Due to the complexity of the physical model, to the boundary conditions or to the temperature dependency of the material properties it is often not possible to construct a differential equation that provides the required solutions for the simulation.

It can be said that the objectives of the simulation and the limitations imposed by the currently available hardware (e.g. cycle calculation time, data transfer rate, visual presentation) require the simplification of the physical model and the construction of an approximation formula this, however, does not mean that the skilled person could not deviate from the exemplary model presented here when faster hardware or greater calculation capacity will be available in the future.

The derivates are substituted with finite differences, which can be calculated as the temperature difference between two spatial points that are spaced from each other by $\Delta l$ distance, or the temperature difference between a first and second temperature measured in the same spatial point with $\Delta T$ time difference. For this, the examined space-time region has to be divided into finite intervals. The fineness of the division is practically chosen with regard to the size of the examined region and the required accuracy. The division of the space-time results in a lattice with an even spacing wherein the lattice lines meet in lattice nods. The nods, which are indexed in the x, y and z directions, are each assigned a temperature. A lattice, which is suitable for examining the 1-dimensional transient heat transfer, has a lateral spacing of $\Delta x$ and a time spacing of $\Delta T$. The temperatures are as follows:

$t(x, T) = t(i \cdot \Delta 1x, j \cdot \Delta T)$ which have two indexes for obvious reasons. Fig. 9 shows the general points $u(x, y, T)$ of a plane and the starting point $u_{i,j,T}$.

An exemplary thermodynamic simulation model is the following.

The transformation of electric energy into thermal energy (heat) is calculated according to the JOULE-LENZ law:

$$Q = U \cdot I = \frac{U^2}{R} = I^2 \cdot R$$

wherein:

U is the electric voltage,
I is the electric current,
R the resistance of the system.

The energy inputted by the electric arc is:

$$dQ = U_h \cdot I_h \cdot k \cdot dt$$

wherein:

$U_h$ is the welding voltage,
$I_h$ is the welding current,
k is a material constant, which is determined empirically for the simulation (its value is 0.9 for aluminium and 0.5 for steel),
t is the time duration of the energy input.

The inputted energy induces in the material (the workpiece that is being welded) a change in its internal energy which can be described as a function of time:

$$Q(T_2) = Q(T_1) + \int_{T_1}^{T_2} c_\rho \, dt$$

and:

$$c_\rho = \frac{dQ}{dT}$$

wherein:

$C_\rho$ is the heat capacity of the material,
$T_1$ is the starting temperature,
$T_2$ is the new temperature,
dT is the temperature change,
dQ is the change of the internal energy.

For the purpose of the simulation the $C_\rho$ heat capacity is assumed to be constant, which provides an acceptable estimate in view of the above considerations and taking into account that the result of the calculation is only used for the visual presentation.

The temperature is:

$$T = \frac{Q}{c_\rho}$$

For solving the above equations the simulated structure is divided by 1x1 mm lattice spacing, providing evenly spaced lattice points. For the purpose of the simulation the energy is inputted at the lattice points and the heat propagates along the elemental surfaces. The heat conduction is non-linear and is distributed between the neighbouring lattice points, according to square law due to the 2-dimensional system. Since the neighbouring points are that of a circle of radius n, the energy diminishes in the direction of the increasing radius similarly to the amplitude decrease of a wave generated by a pebble thrown into the water. The means of inputting the energy is the virtual welding gun (the end of the virtual wire or the end of the virtual tungsten electrode) and the energy is inputted into the nearest contacted point, each lattice point receiving energy separately. The physical model calculates the energy propagation at discrete time intervals (30 times per each second). The simulation serves the purpose of visual presentation, therefore the thickness of the material is set as 0.

The energy of one lattice point is:

$$Q_r = \frac{Q_r\,(1-k_h) + k_h Q_k}{n_k} - Q_h$$

wherein:

$Q_r$ is the energy of the lattice point,
$Q_h$ is the energy/heat loss of the material during 1/30 sec,
$Q_k$ is the energy of the neighbouring points,
$n_k$ is the number of the neighbouring points,
$k_h$ is a constant describing the speed of the heat conduction for the purpose of the simulation.

The virtual reality is constructed with a mathematical method over the spatial lattice. The volume units of the virtual reality also have the properties of the material. The neighbouring points are only regarded within a circle of radius n, the use of a greater n provides more accurate results but the simulation becomes slower. In the most simple case n=1, thus the four neighbouring lattice points are calculated. The physical simulation performed on the lattice ensures that the simulation of the thermal parameters on the examined part of the real workpiece projected into the virtual space, as well as what has been described earlier: the heat conduction, the melting, and in the case of aluminium the continuity error and the burn through.

The complex phenomenon of heat propagation has been thus described as elemental process in order to be able to carry out the simulation, while at the same time the heat transfer forms of arc welding have been approximated accurately. The handling of the individual components (e.g. heat transfer, heat radiation, heat loss) is a methodical choice, and their sum provides the real value of the heat inputted into the system as a result of the power of the electric arc. This is based on the fact that the process of arc welding can be estimated in a way supported by scientific research, the error due to the linearization is within the acceptable tolerance, and the representation of the process and its visual presentation is better than the known models (Lincoln, Fronius, etc.). The simplifying approximate method presently described is also just for the reason that always the same materials (i.e. materials having the same coefficient of thermal conductivity) are being welded together (in the present case steel with steel, or aluminium with aluminium), the heat current density of the contact surfaces (weld place) are the same, as well as their temperature, i.e. their surface temperature. This is the requirement for achieving a satisfying weld. The material constants used for the simulation are presented in the following table:

Table 1

| Material | Density [kg/m3] | Coefficient of thermal conductivity [W/m·K] | Heat capacity per unit mass [J/kg·K] |
|---|---|---|---|
| Steel | 7850 | 48 | 460 |
| Aluminium | 2710 | 237 | 888 |

The weld parameters calculated from the simulated thermodynamic values, the correct gun position, and the earlier mentioned diagrams 36 can be displayed both during welding and afterwards, and can also be stored in the computer 16a for later viewing.

Since the software uses the lattice structure of the material for simulating the process of heat conduction and calculates the changes of temperature, preferably the material-specific decolourization of the welded material and weld corresponding to the given temperature as well as any colour change accompanying the temperature change can also be displayed to the user. When steel is heated the colour of red glow can be seen in the heat transfer region, which colour becomes white when the temperature reaches the melting point. The colour of cooling also corresponds to the material properties of steel. When welding aluminium the welded material and the weld become white near the melting point. As long as no melt is formed the colour of the weld corresponds to the grey colour of the material, indicating that the quality of the weld is not satisfactory. When reaching the melting point the colour of the material becomes black and the weld melts through. The surface that has melted through cannot be welded any longer and this spot can be displayed as a non-correctable error.

The virtual reality 34 displayed on the display device 14a within the simulator welding helmet 14 is preferably also displayed on an external monitor for other users in order to facilitate tutorial supervision or group training. Preferably a 3-dimensional external monitor is used for this purpose, however it is also possible to display the image projected for a single eye of the user. The external monitor may be the screen 16b of the computer 16a, or it may be dedicated separate device, in particular if 3-dimensional displaying needs to be ensured. In the latter case the display devices described in connection with the inner 3-dimensional display device 14a may be applied.

It is further possible to display the image of the user's hand with the so called green screen technology during the simulation. In this case the user wears a welding glove of appropriate colour (e.g. green or yellow) during simulation of the welding, and the control device 16 displays the real image of the camera 13 in the virtual reality 34 at the location of the welding glove so as to correspond to its real position.

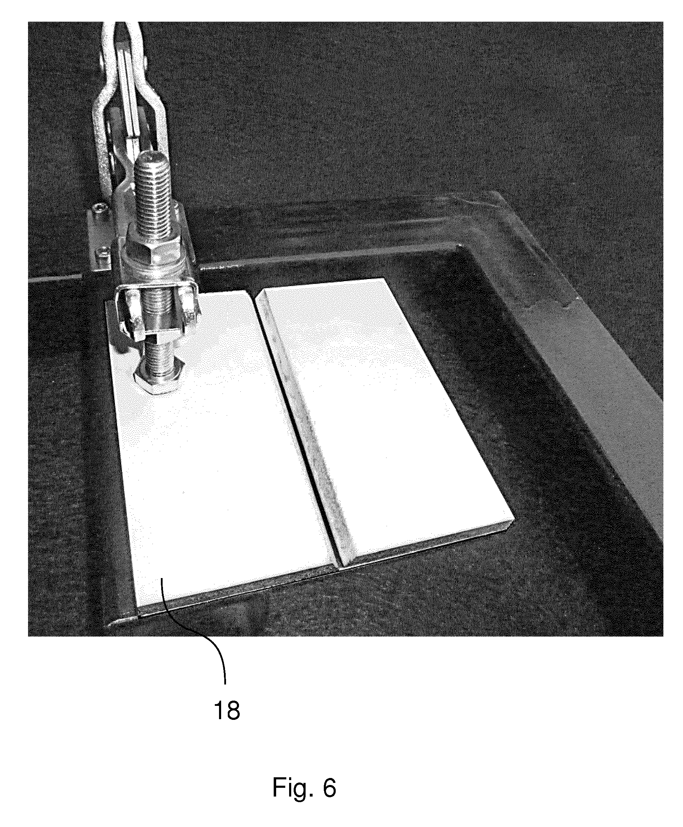

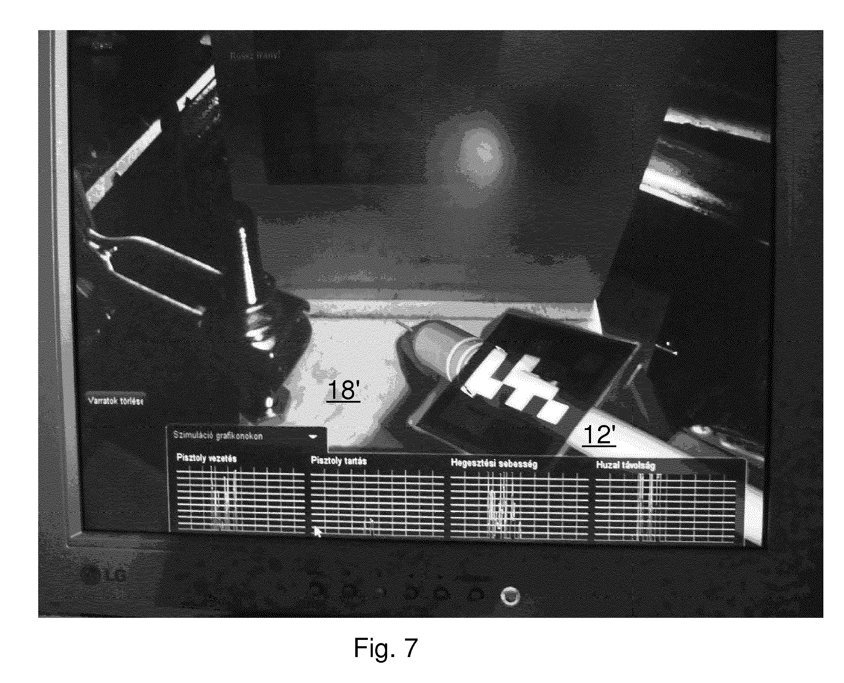

The method according to the invention and the simulation system 10 does not only allow for training and practicing on a standard workpiece 18 but also allows for the simulation of real welding works, including the possibility of displaying a real environment, real welding gun and real workpiece 18 (see Fig. 6) in virtual reality (see Fig. 7). In this case prior to starting the welding simulation an optical marker 26 described earlier is placed on the real workpiece 18, and the camera image of the real workpiece 18 is displayed to the user as virtual workpiece 18' during the simulation of the welding process, preferably together with the camera image of the real environment as background.

The location of the simulated weld that is to be created may be defined as the numeric distances relative to an origin (e.g. from the optical marker 26) or the user may guide the end 12b of the simulator welding gun along the weld that is to be created while the control device 16 registers the trajectory of the end 12b. The thus defined location of the weld that is to be created is then displayed to the user in the virtual reality 34, however, it is also possible to use the location of the weld for the purpose of comparison with the parameters of the actually created simulated weld, i.e. for the purpose of determining how accurately the user followed the marked weld location on the real workpiece 18.

The user's gun guidance and holding (i.e. the trajectory of the simulator welding gun 12, its distance from the workpiece, and its angle therewith) will be compared automatically with the optimal gun guidance and holding for the weld to be created in this case too. The differences can be displayed in a table or in the form of a diagram during the simulation to the user or e.g. to a tutor supervising his or her work.

The user may start the welding simulation after having set the parameters of the welding and having given the location of the weld to be created. In this case preferably the image of the background captured by the camera 13 is displayed as 3-dimensional virtual reality 34 by the 3-dimensional display device 14a inside the simulator welding helmet 14, wherein the virtual workpiece 18' is the 3-dimensional camera image of the real workpiece 18. The camera image of the simulator welding gun 12 may advantageously be substituted by 3-dimensional computer graphics, whereby the virtual welding gun 12' may appear as the computer graphics of a real welding gun which is physically different from the simulator welding gun 12 that is being used. Alternatively, the simulator welding gun 12 may be designed as a realistic copy of the real welding gun that is to be simulated, in which case the camera image of the simulator welding gun 12 may appear as the virtual welding gun 12' in the virtual reality 34. The virtual weld 32 that is created by the simulated welding process is preferably displayed with the help of computer image processing on the virtual workpiece 18' that is in the form of a camera image. The respective positions of the workpiece 18 and the simulator welding helmet 14 can be sensed and calculated with the help of the camera 13 and the optical markers 26, whereby the virtual weld 32 can be displayed on the virtual workpiece 18' at the location and with the orientation corresponding to the actual view point of the user. View point dependent 3-dimensional display and the required calculations for it are well known by the skilled person from the prior art and will not be presented in more detail herein.

Preferably, the virtual spark image 38 and virtual smoke is also displayed in the case of simulating welding on a real workpiece 18, and these are also displayed on the 3-dimensional camera image at a position corresponding to the user's view point.

The importance of simulating welding on a real workpiece 18 resides in the fact that once the user has learned and practiced the correct welding movements he or she will be able to perform the welding operation on the real workpiece 18 with a real welding gun corresponding to the simulated welding gun.

An advantage of the simulation process according to the invention is that while receiving close to real life noise load the users are not exposed to environmental stress, radiation, smoke generated during welding, and the risk of accidents is also eliminated. There are no material and energy costs, no wearing components are used, no waste is produced, the environment is not polluted. After the training, the time required for practicing real welding is substantially reduced by the simulation of welding of real workpieces 18 at real conditions, and may even be omitted in case of training on-site. Having regard to the above results the costs of training can be reduced by 25% as compared to the costs of conventional training.

The training preferably takes place in multiple modules. The participants (users) first receive theoretical teaching after which they learn the basics of gun holding (tilting), gun guidance (speed, distance, weld-specific requirements) in the virtual environment. Learning the correct gun tilt and gun guidance is assisted by the control device 16 evaluating the data of the actual gun guidance by presenting, in table or diagram form, the deviations and the direction of any change required with respect to the correct gun position within a given range that is calculated from the thermodynamic parameters. In the following module the participants learn welding on standard workpieces 18 in the required weld positions, more particularly, on the virtual workpieces 18' in virtual reality 34. The welding parameters that are to be set by the user (trainee) or the selected welding parameters can be monitored graphically, as well as the welding voltage/current, the gun tilt, the speed. The displayed virtual weld 32 always corresponds to the circumstances of the simulated weld formation during the welding operation, i.e. the "formed" weld is displayed by the 3-dimensional display device 14a inside of the simulator welding helmet 14 of the simulation system 10 at the location and with the form, thickness and errors (such as burn through of the material) corresponding to the simulation results. Upon ending the practicing the evaluation in table form or graphical form may be stored or printed with the name of the user. The trainer may help the trainee or other person practicing the correct weld creation even during the welding operation e.g. based on the data displayed on the screen 16b of the control device 16. In case of group training the participants who are not currently welding may preferably observe on a 3-dimensional display the work of the user currently welding. Preferably a single display (either the screen 16b of the control device 16 or an external 3-dimensional monitor) may serve to display the image of a plurality of display devices 14a of a plurality of simulator welding helmets 14, whereby the trainer can teach a plurality of trainees at the same time and can asses, evaluate, record or store their data based on the simulation data.

In the following module, specific exercises are practiced. This may be an independent module in the case of qualified welders who do not need to participate in the prior learning phases. In this case the user (the welder) sees the 3-dimensional virtual image (partially the 3-dimensional camera image and partially the 3-dimensional computer graphics) of the real environment (work area, welding machine, workpiece, weld) as the virtual reality 34. The welder practices the real welding work in virtual conditions at the location of the "image" of the real weld until reaching an acceptable error margin defined in the standards, after which he or she may proceed with welding the real workpiece 18.

Various modifications to the above disclosed embodiments will be apparent to a person skilled in the art without departing from the scope of protection determined by the attached claims.

## Claims

1. Method for simulating welding with a virtual welding simulator that comprises a simulator welding gun, a simulator welding helmet having an inner display device capable of 3-dimensional image display and a control device connected to these, **characterised by**

   - providing a camera on the simulator welding helmet,
   - providing an optical marker on the simulator welding gun,
   - providing a workpiece and providing it with an optical marker,
   - detecting the optical markers with the camera,
   - calculating the spatial position of the optical markers and thereby the spatial positions of the simulator welding gun and the workpiece via the control device,
   - displaying to the user 3-dimensional virtual reality on the inner display device of the simulator welding helmet, and displaying in the virtual reality a virtual welding gun corresponding to the simulator welding gun and a virtual workpiece corresponding to the workpiece in accordance with their spatial position,
   - allowing the user use of the simulator welding gun such as to simulate welding,
   - determining the parameters of a simulated weld from the user's use of the simulator welding gun and the relative positions of the simulator welding gun and the workpiece with respect to each other via the control device,
   - displaying to the user a virtual weld corresponding to the simulated weld parameters on the virtual workpiece on the inner display device of the simulator welding helmet.

2. The method according to claim 1, **characterised by** displaying to the user on the inner display device of the simulator welding helmet in 3-dimension an image captured by the camera as the virtual reality, which is partially or completely substituted during the simulation of welding by 3-dimensional computer graphics of the simulated weld as virtual weld, and in a given case with 3-dimensional computer graphics of the simulator welding gun as virtual welding gun and/or with 3-dimensional computer graphics of the workpiece as virtual workpiece.

3. The method according to claims 1 or 2, **characterised by** simulating an auto darkening filter of a real welding helmet by decreasing the light intensity of the virtual reality displayed on the inner display device of the welding helmet and/or by displaying the colours of the virtual reality in a darker tone.

4. The method according to any one of claims 1 to 3, **characterised by** that the workpiece is a standard workpiece that is provided with an optical marker and by displaying during the simulation of welding a 3-dimensional computer graphics of the standard workpiece as the virtual workpiece.

5. The method according to any one of claims 1 to 3, **characterised by** providing an optical marker on the workpiece prior to the simulation of welding and displaying the camera image of the workpiece in 3-dimension as the virtual workpiece.

6. The method according to claim 5, **characterised by** determining the location of the weld from a weld position stored by a program of the control device.

7. The method according to any one of claims 1 to 6, **characterised by** displaying the computer graphics of a real welding gun as the virtual welding gun during simulation of welding.

8. The method according to any one of claims 1 to 7, **characterised by** providing the simulator welding gun with an acceleration sensor, preferably with an electric gyroscope, the signals of which is transmitted to the control device for calculating the spatial position of the simulator welding gun.

9. The method according to any one of claims 1 to 8, **characterised by** defining the virtual reality as a spatial lattice the volume elements of which are attributed the physical properties corresponding to the material structure of the workpiece, and calculating the parameters of the simulated weld by the physical simulation of the thermodynamic values on the lattice.

10. The method according to claim 9, **characterised by** evaluating the simulated thermodynamic values during the simulation of welding via the control device and determining therefrom indicators relating to the quality of welding, and continuously displaying, preferably at a location corresponding to the peripheral field of vision of the user, the indicators graphically on the inner display device of the simulator welding helmet during the simulation of the welding.

11. The method according to any one of claims 1 to 10, **characterised by** determining, as a parameter of the simulated weld, the relative position of the simulated weld, created as a result of the simulated welding, with respect to the workpiece and displaying the virtual weld on the virtual workpiece at a position corresponding to the determined relative position.

12. The method according to any one of claims 1 to 11, **characterised by** determining the position of the weld that is to be created and calculating an optimal welding gun position and guidance therefrom via the control device, and during the use of the simulator welding gun for simulating the welding comparing the position and guidance of the simulator welding gun with the optimal gun position and guidance and continuously displaying, preferably at a location corresponding to the peripheral field of vision of the user, the result of the evaluation on the inner display device of the simulator welding helmet during the simulation of the welding.

13. The method according to any one of claims 1 to 12, **characterised by** determining, as a parameter of the simulated weld, any defects and any burn through of the simulated weld created as a result of the simulation of welding, and displaying the virtual weld on the virtual workpiece together with any determined defects and burn through.

14. The method according to any one of claims 1 to 13, **characterised by** providing a simulator cold wire feeder for simulating the manual feeding of the wire in the case of the simulation of tungsten electrode inert gas welding.

15. The method according to claim 14, **characterised by** providing a capacitive sensor row as the simulator cold wire feeder for sensing the displacement of the user's thumb, and calculating therefrom the speed of feeding the cold wire.

16. The method according to any one of claims 1 to 15, **characterised by** allowing the user to set the simulation parameters of the simulated welding and simulating the welding based on the provided parameters.

17. The method according to claim 16, **characterised by** allowing the user to set as simulation parameters the parameters of the workpiece, to select a simulated welding gun and to set welding parameters.

18. The method according to claims 16 or 17, **characterised by** controlling the set simulation parameters by the control device, and deferring the start of the simulation until any errors have been corrected.

19. The method according to any one of claims 1 to 18, **characterised by** displaying the 3-dimensional image that is displayed on the inner display device of the simulator welding helmet on an external 3-dimensional display device as well for other user(s).

20. The method according to any one of claims 1 to 19, **characterised by** providing an audio system in the simulator welding helmet and providing sounds corresponding to the sound of the simulated welding for the user during simulation of welding.

21. The method according to any one of claims 1 to 20, **characterised by** providing a mount for spatially mounting the workpiece.

22. The method according to any one of claims 1 to 21, **characterised by** determining, as a parameter of the simulated weld, the shape and thickness of the simulated weld created as a result of the simulated welding, and displaying the virtual weld on the virtual workpiece with a corresponding shape and thickness.

23. The method according to any one of claims 1 to 22, **characterised by** determining a simulated spark image by the control device, and displaying to the user a virtual spark image corresponding to the simulated spark image on the inner display device of the simulator welding helmet.

**24.** The method according to any one of claims 1 to 23, **characterised by** creating images for the right and the left eye for 3-dimensional displaying from the camera image using perspective projection technology, or using a stereo camera for capturing 3-dimensional images.

**25.** The method according to any one of claims 1 to 24, **characterised by** providing a welding glove having a colour suitable for using green screen technology, recognising the welding glove and substituting it with corresponding computer graphics in the virtual reality.

**26.** The method according to any one of claims 1 to 25, **characterised by** determining a simulated smoke image by the control device, and displaying to the user a virtual smoke image corresponding to the simulated smoke image on the inner display device of the simulator welding helmet.

Fig. 1

Fig. 2

Fig 3.

Fig. 4

Fig. 5

18

Fig. 6

Fig. 7

Fig. 8

Fig. 9

Europäisches
Patentamt

European
Patent Office

Office européen
des brevets

# EUROPEAN SEARCH REPORT

Application Number

EP 13 18 5100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/183304 A1 (WALLACE MATTHEW WAYNE [US] ET AL) 28 July 2011 (2011-07-28) * paragraphs [0032], [0056], [0059], [0060], [0061], [0063], [0064], [0066], [0069], [0074], [0075], [0078], [0080], [0083] - [0088] * ----- | 1-26 | INV. G09B19/24 |
| Y | US 2012/122062 A1 (YANG UNG-YEON [KR] ET AL) 17 May 2012 (2012-05-17) * paragraphs [0026], [0027] * ----- | 1-26 | |
| A | WO 2009/146359 A1 (ILLINOIS TOOL WORKS [US]; BATZLER TODD [US]; ALBRECHT BRUCE [US]; BECK) 3 December 2009 (2009-12-03) * claim 1; figure 1 * ----- | 1-26 | |

TECHNICAL FIELDS
SEARCHED        (IPC)

G09B

The present search report has been drawn up for all claims

| Place of search | Date of completion of the search | Examiner |
|---|---|---|
| Munich | 1 October 2014 | Beauce, Gaetan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 18 5100

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2014

| Patent document cited in search report | | | Publication date | Patent family member(s) | | | Publication date |
|---|---|---|---|---|---|---|---|
| US 2011183304 | A1 | | 28-07-2011 | CA | 2800876 | A1 | 01-12-2011 |
| | | | | CN | 103038804 | A | 10-04-2013 |
| | | | | EP | 2577643 | A2 | 10-04-2013 |
| | | | | RU | 2012152526 | A | 10-07-2014 |
| | | | | US | 2011183304 | A1 | 28-07-2011 |
| | | | | WO | 2011148258 | A2 | 01-12-2011 |
| US 2012122062 | A1 | | 17-05-2012 | CN | 102592484 | A | 18-07-2012 |
| | | | | KR | 20120052783 | A | 24-05-2012 |
| | | | | US | 2012122062 | A1 | 17-05-2012 |
| WO 2009146359 | A1 | | 03-12-2009 | US | 2009298024 | A1 | 03-12-2009 |
| | | | | WO | 2009146359 | A1 | 03-12-2009 |

EPO FORM P0459

For more details about this annex : see Official Journal of the European Patent Office, No. 12/82